Europäisches Patentamt

European Patent Office

Office européen des brevets

(11) Veröffentlichungsnummer: **0 314 900**
**A2**

(12) **EUROPÄISCHE PATENTANMELDUNG**

(21) Anmeldenummer: 88114660.9

(22) Anmeldetag: 08.09.88

(51) Int. Cl.⁴: **B29C 43/24 , B29C 43/30 , B29C 47/32 , //B29L30:00**

(30) Priorität: 06.11.87 DE 3737676

(43) Veröffentlichungstag der Anmeldung:
10.05.89 Patentblatt 89/19

(84) Benannte Vertragsstaaten:
DE FR GB IT

(71) Anmelder: HERMANN BERSTORFF
Maschinenbau GmbH
An der Breiten Wiese 3/5
D-3000 Hannover 61(DE)

(72) Erfinder: Capelle, Gerd, Dipl.-Ing.
Hainhäuser Weg 55
D-3012 Langenhagen 6(DE)

(54) **Verfahren und Einwalzenkopfsystem zum Herstellen von aus mehr als einer Kautschukkomponente bestehenden Profilstreifen für Laufstreifen von Autoreifen.**

(57) Es wird ein Verfahren und ein Einwalzenkopfsy- stem offenbart zum Herstellen von aus mehr als einer Kautschukkomponente bestehenden Reifenpro- filen von Autoreifen, bei dem die einzelnen, aus verschiedenen Mischungen bestehenden Kautschuk- profilstreifen mittels entsprechende Mundstücke auf- weisender Profilköpfe auf eine rotierende Walze ex- trudiert werden. Jeder Profilkomponentenstreifen wird individuell auf einem Einwalzenkopf hergestellt, auf der jeweiligen Walze des Kopfes randbeschnitten und die randbeschnittenen Profilkomponentenstreifen werden anschließend in den Spalten, gebildet durch die einzelnen Walzen der Einwalzenköpfe zu einem fertigen Profilstreifen zusammenlaminiert. Mittels die- ses Verfahrens wird somit ein Reifenprofil mit sehr exakten Abmessungen erhalten. Die Einrichtung ist sehr übersichtlich und einfach in der Herstellung.

Fig. 2

EP 0 314 900 A2

## Verfahren und Einwalzenkopfsystem zum Herstellen von aus mehr als einer Kautschukkomponente bestehenden Profilstreifen für Laufstreifen von Autoreifen

Die Erfindung betrifft ein Verfahren der Gattung, wie beschrieben im Obergriff des ersten Patentanspruchs sowie einem Einwalzenkopfsystem, wie beschrieben im Patentanspruch 2.

Aus der US-PS 4,539,169 ist ein Einwalzenkopfsystem bekannt. Von einzelnen Extrudern gespeiste Spritzköpfe extrudieren einen Profilstreifen auf eine rotierende Walze. Die Oberseite des Düsenaustrittes des Spritzkopfes wird gebildet durch eine entsprechend der oberen Laufstreifenform ausgebildete Spritzleiste. Die Unterseite des Düsenaustrittes wird durch die rotierende Walze gebildet.

Die Rotation der Walze begünstigt das Ausziehen des Profilstreifens aus dem Spritzkopf, wodurch der Spritzdruck im Kopf herabgesetzt werden kann. Das Arbeiten mit geringeren Spritzdrücken im Kopf hat große Vorteile. Die Vorkehrungen für die Abdichtung der Köpfe können vereinfacht werden. Insbesondere wird die Gefahr der unerwünschten Einleitung von Scherenergie durch hohe Spritzdrücke bis 200 bar in die relativ temperaturempfindlichen Kautschukmischungen wesentlich verringert. Ausserdem übt die Walze einen zusätzlichen Kalibriereffekt auf den Laufstreifenteil aus, wodurch die Genauigkeit des Reifen profil erhöht wird.

Einwalzenkopfsysteme haben jedoch Nachteile, insbesondere wenn ein Laufstreifen aus mehreren, hinsichtlich der Eigenschaften und Viskositäten sich stark unterscheidenden Kautschukmischungen damit zu einem Profilstreifen extrudiert werden.

Da die Unterseite des Düsenaustrittes durch die rotierende Walze gebildet wird, was einen gewissen, wenn auch geringen Abstand zwischen Düse und Walze bedingt, muß der extrudierte Laufstreifen stets breiter auf die Walze extrudiert werden als er gebraucht wird, weil die Randbereiche des relativ dünnen Profilstreifens sonst nicht in voller Dicke ausextrudiert werden. Der überstehende, zu breit extrudierte Rand, der durch einen Randbeschnitt entfernt wird, ist in der Fachwelt als "Flash" bekannt. Es ist somit ein nachträglicher Randbeschnitt der Profilstreifen erforderlich.

Die Anordnung von Randbeschneidmessern und die Abführung der abgeschnittenen Ränder bei einem Einwalzensystem, bei dem mit mehreren Spritzköpfen gegen eine Walze gearbeitet wird, ist aus Platzgründen sehr schwierig. Es ist nur ein Randbeschneiden des fertigen Profils durchführbar. Es werden daher von dem sich aus mehreren, unterschiedlichen Kautschukmischungen zusammenextrudierten Reifenprofil die Ränder abgeschnitten.

Derartige, aus unterschiedlichen Kautschukmischungen sich zusammensetzende Randbeschnitte sind nicht wieder verwendbar, weil sie z.B. aus einem Kautschuk mit sehr hohem Rußanteil zwecks Erhöhung der Abriebfestigkeit des Reifens und aus einem Kautschuk mit sehr weicher Qualität, z.B. für die Untergummilage des Laufstreifens, bestehen.

Es entstehen daher pro Tag mehrere Tonnen nicht bzw. nur für sehr preisgünstige Gummiartikel verwendbare Abfallrandstreifen.

Bei den in der Mitte des Reifenprofils sich überlappenden Kautschukmischungen ist ein Randbeschneiden nicht durchführbar, weil nur der aus mehreren Kautschukmischungen sich zusammensetzende fertige Laufstreifen randbeschnitten werden kann. Es sind daher große Ungenauigkeiten der auf einem derartigen Einwalzenkopfsystem hergestellten Reifenprofile in Kauf zu nehmen, die zu Schwachstellen im Autoreifen führen.

Ein individueller Randbeschnitt der einzelnen Laufstreifenkomponenten ist beim Einsatz eines derartigen Kopfes nicht möglich.

Es ist die Aufgabe der Erfindung, das Verfahren und ein Einwalzenkopfsystem zum Herstellen von Reifenprofilen so zu verbessern, daß damit ein nahezu perfektes, aus mehreren Komponenten sich zusammensetzendes Profil hergestellt werden kann.

Das Verfahren soll einfach und sicher in der Handhabung sein und das Einwalzenkopfsystem mit einfachen Spritzköpfen auskommen sowie einen individuellen Randbeschnitt aller Komponenten erlauben.

Die Aufgabe wird gelöst durch ein Verfahren mit den Merkmalen, wie beschrieben im Patentanspruch 1. Eine für die Durchführung des Verfahrens besonders geeignete Einrichtung wird beschrieben im Patentanspruch 2 sowie in den Unteransprüchen.

Durch die Herstellung der Profilkomponentenstreifen jeweils individuell in einem Einwalzenkopf, ist eine sehr viel genauere und angepaßtere Herstellung möglich. Die Temperaturführung in den einzelnen Köpfen kann exakt an die jeweilige, optimale Extrusionsviskosität der speziellen Kautschukmischun gen angepaßt werden.

Bei einem Einwalzenkopf mit drei oder mehr Fließkanälen übereinander, der auf eine Walze extrudiert, wie gezeigt in der US-PS 4,539,169, kann nur eine generelle Kopftemperatur eingestellt werden.

Der schwerwiegendere Nachteil besteht jedoch darin, daß nur eine Walze, auf die alle Profilkomponentenstreifen nacheinander aufextrudiert werden, vorhanden ist, die nur auf eine Temperatur eingestellt werden kann. Es kann somit nicht auf die optimale Laminiertemperatur, die für alle Profilkomponentenstreifen unterschiedlich sein kann, eingegangen werden, wodurch die Laminierung der einzelnen Streifen aufeinander nicht optimal ist. Schwachstellen in dem Laufstreifen bzw. im Autoreifen sind somit nicht zu vermeiden.

Durch die erfindungsgemäße Extrusion von Einzelkomponentenstreifen in separierten Köpfen und auf separierten Walzen, kann sehr individuell auf die günstigste Verarbeitungstemperatur, in Anpassung an die jeweilige optimale Verarbeitungsviskosität, eingegangen werden.

Von großer Bedeutung ist, daß jeder Profilkomponentenstreifen exakt auf seine tatsächlich benötigte Abmessung randbeschnitten werden kann, was insbesondere für schmalere, auf breitere Profilkomponentenstreifen aufzulaminierende Streifen sehr wichtig ist.

Wie eingangs bereits erwähnt, müssen derartig auflaminierte Streifen, die z.T. sehr dünne Seitenlippen aufweisen, breiter als benötigt extrudiert werden, um den dünnen Lippen die volle erforderliche Abmessung zu verleihen. Bei einer Kopfausbildung, wie gezeigt in der US-PS 4,539,169, muß entweder auf eine exakte Ausbildung der dünnen Seitenlippen verzichtet oder es muß in Kauf genommen werden, daß die oberen, auf die breiteren Streifen aufextrudierten Streifen einen überstehenden "Flash" haben.

Neben der Tatsache, daß zuviel Material verbraucht wird, hat der "Flash" den Nachteil, daß er keine vorher festzulegenden Abmessungen hat, so daß Ungenauigkeiten im fertigen Reifenprofil nicht zu vermeiden sind.

Durch die Extrusion von exakt temperierten Einzelstreifen aus Einzelköpfen auf definiert temperierte Einzelwalzen, wird die Einstellung von hochwirksamen Laminierbedingungen in den Walzenspalten erreicht.

Auch das erfindungsgemäße Einwalzenkopfsystem für die Durchführung des Verfahrens hat große Vorteile.

Durch die Herstellung von einzelnen Komponentenstreifen, jeweils in separaten Einwalzenköpfen, ist die Gestaltung des Kopfes, der darin enthaltenden Fließkanäle und ihrer Einsätze sowie der jeweiligen Mündstückspritzleiste am Austritt des Kopfes, sehr einfach und unkompliziert. Insbesondere wird jedoch auch ein Auswechselvorgang der Spritzleisten und Einsätze bei der Herstellung einer anderen Laufstreifengröße oder -art wesentlich erleichtert.

Wenn bei einer Konstruktion, wie gezeigt in der US-PS 4,539,169, die einzelnen Profilkomponentenstreifen jeweils übereinander auf nur eine rotierende Walze extrudiert werden, können beim Aufextrudieren des einen Streifens auf den bereits vorhandenen leicht Verzerrungen der einzelnen Streifen entstehen.

Werden jedoch gemäß der Erfindung, die einzelnen Streifen in einem Walzenspalt fast drucklos zusammenlaminiert, bei exakt gleicher Umfangsgeschwindigkeit der einzelnen Walzen sowie der günstigsten Laminiertemperaturen, wird eine ausgezeichnete Verbindung sichergestellt.

Ausführungsbeispiele von Einwalzenkopfsystemen, die sich für die Durchführung de erfindungsgemäßen Verfahrens besonders eignen, werden in den Zeichnungen gezeigt und nachfolgend erläutert.

Es zeigen:

Fig. 1 ein aus drei Einwalzenköpfen bestehendes Einwalzensystem.

Fig. 2 ein aus vier Einwalzenköpfen bestehendes Einwalzensystem.

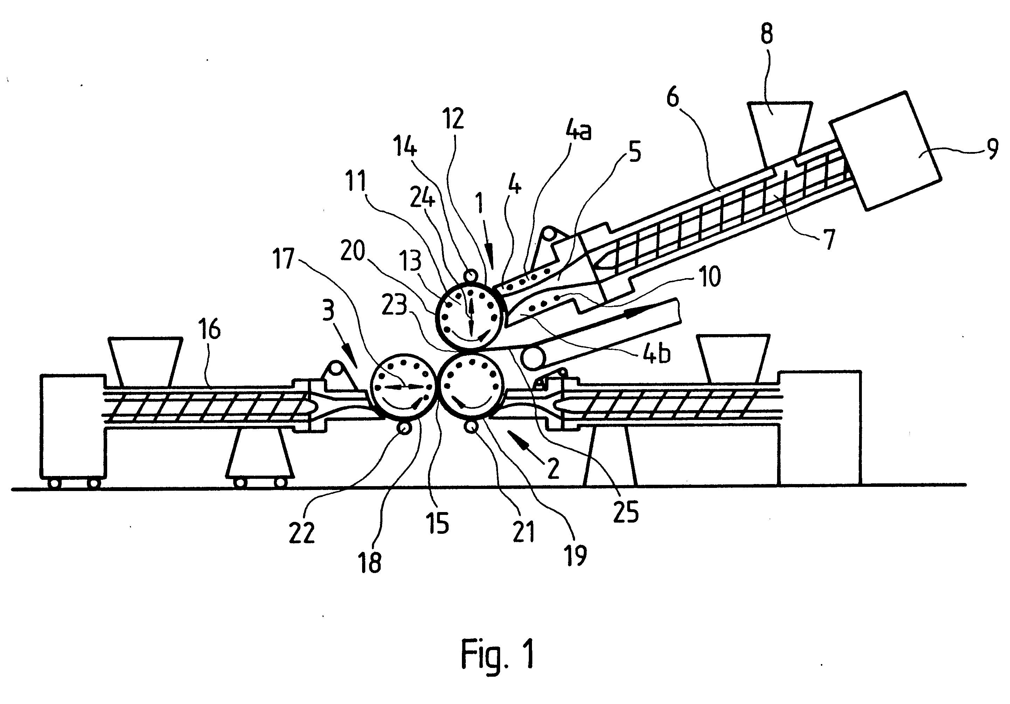

Das in Fig. 1 gezeigte System besteht aus 3 Einwalzenköpfen 1, 2 und 3.

Der Einwalzenkopf 1 besteht aus dem Spritzkopf 4 mit den eingearbeiteten Fließkanälen 5. An dem Kopf ist ein Extruder 6 angeflanscht mit einer Extruderschnecke 7, einem Materialeinspeisetrichter 8 und einem Antrieb und Getriebe 9.

In dem Kopfoberteil 4a und dem Kopfunterteil 4b sind in bekannter Weise Temperierbohrungen 10 eingebracht, mit daran angeschlossenen bekannten und daher nicht gezeigten Tempiergeräten, um eine exakte Kopftemperatur einstellen zu können.

Die Frontseite des Kopfes 4 ist der Krümmung der Oberfläche der Walze 11 angepaßt. Die Austrittsöffnung des Kopfes 4 wird begrenzt durch das verschwenkbar ausgebildete Kopfoberteil 4a und durch den rotierenden Mantel 12 der Walze 11. Der rotierende Walzenmantel, der die untere Begrenzung der Austritts öffnung bildet, zieht gewissermaßen das Material aus dem Kopf heraus, wodurch mit wesentlich weniger Materialdruck im Kopf gearbeitet werden kann.

In der Walze 11 sind axiale Temperierbohrungen 13 eingebracht, die zusammen mit einer nicht gezeigten Innenbohrung ein Umlaufsystem bilden, ähnlich dem in der US-PS 2,771,246 beschriebenen System. Mittels dieses Systems ist eine sehr exakte Temperaturführung über die gesamte Walzenbreite durchführbar.

Auf der Walze ist eine bekannt Randbeschneideinrichtung angeordnet, mit Kreismessern 14, die jeweils, z.B. auf einer Drehspindel, auf beiden Seiten des extrudierten Profilstreifens angeordnet und in Richtung der Walzenlängsachse sowie radial dazu verstellbar ausgebildet sind.

Anstelle von Kreismessern, die durch den Walzenmantel mitgeschleppt werden, können auch stationäre Stichmesser vorgesehen werden, wie gezeigt in der US-PS 2,987,948.

Die Einwalzenköpfe 2 und 3 sind in gleicher Weise aufgebaut und stellen ebenfalls einen Profilkomponentenstreifen her.

In dem Walzenspalt 15 zwischen der Walze des Kopfsystems 2 und 3 werden die jeweils mittels des Einwalzenkopfes 2 und 3 hergestellten Streifen 18 und 19 fast drucklos zusammenlaminiert.

Einwalzenkopf 3 ist zusammen mit seinem Extruder 16 verfahrbar ausgebildet, wie gezeigt durch Pfeil 17, um eine exakte Einstellung der Spaltdicke des Spaltes 15 vornehmen zu können.

Durch die Randbeschneideinrichtungen 21 und 22 werden die Streifen 18 und 19 auf ihr Sollmaß gebracht. Die abgeschnittenen Randstreifen werden durch nicht gezeigte, bekannte Einrichtungen aufgefangen und sofort den jeweiligen Extrudern, in denen sie hergestellt wurden, wieder zugeführt, so daß kein Abfall entsteht. Da die abgeschnittenen Streifen nur aus einer Mischungskomponente bestehen, ist eine Zurückführung in den jeweiligen Einspeisetrichter der Extruder völlig problemlos, was·ein großer Vorteil gegenüber einem Herstellungsverfahren darstellt, wie beschrieben in der US-PS 4,539,169. Bei dieser Einrichtung können die abgeschnittenen, aus mehreren Komponenten bestehenden Randstreifen nicht wieder in einen der Extruder eingespeist werden, weil sonst die jeweilige Mischung verunreinigt wird.

Die in dem Spalt 15 zusammenlaminierten Streifen 18 und 19 gelangen in den Spalt 23, in dem sie mit dem Streifen 20 zu einem Dreikomponentenstreifen laminiert werden. Zwecks Verstellung des Spaltes 23 ist das Einwalzenkopfsystem 1 in Richtung des Pfeiles 24 verstellbar ausgebildet, zusammen mit dem Extruder 6 und der Antriebseinheit 9.

Der hergestellte aus drei Komponenten bestehende Laufstreifen 25 wird danach einer weiterverarbeitenden Einrichtung, z.B. einer Ablängeinrichtung, zugeführt.

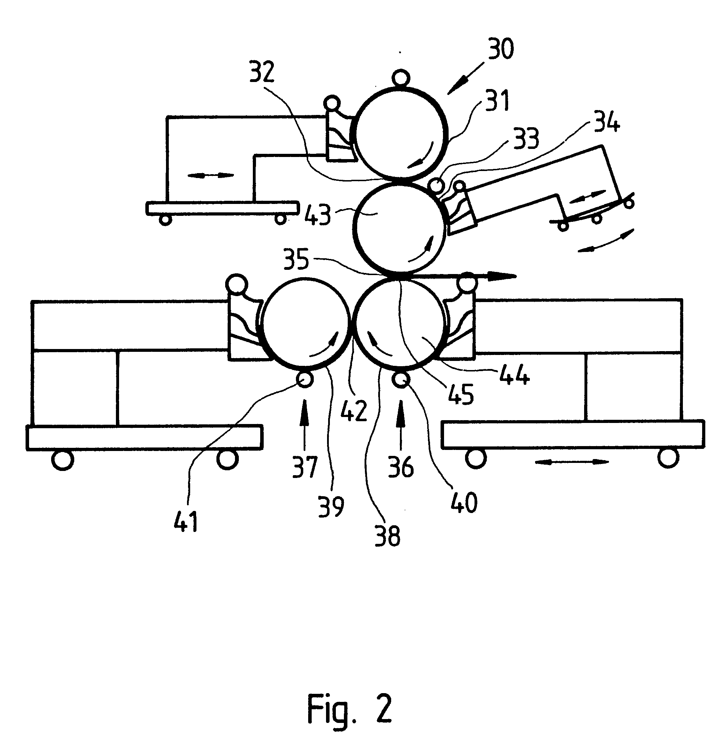

Das in Fig. 2 gezeigte Einwalzenkopfsystem besitzt noch einen vierten Einwalzenkopf 30, der einen Streifen 31 extrudiert, der in dem Spalt 32 mit dem durch die Randbeschneideinrichtung 33 beschnittenen Streifen 34 zusammenlaminiert wird. Beide Streifen gelangen dann in den Spalt 35.

Die durch die Kopfsysteme 36 und 37 herstellten Streifen 38 und 39 gelangen nach vorherigem Randbeschnitt durch Messer 40 und 41 in den Spalt 42, werden hier zusammenlaminiert und von der Walze 44 in den Spalt 45 transportiert. In dem zwischen den Walzen 43 und 44 gebildeten Spalt 45 werden alle vier Profilkomponentenstreifen zusammenlaminiert und aus dem Einwalzenkopfsystem abgezogen.

**Bezugszeichenliste:**

1 = Einwalzenkopf
2 = Einwalzenkopf
3 = Einwalzenkopf
4 = Spritzkopf
4a = Kopfoberteil
4b = Kopfunterteil
5 = Fließkanäle
6 = Extruder
7 = Schnecke
8 = Einspeisetrichter
9 = Antrieb und Getriebe
10 = Temperierbohrungen
11 = Walze
12 = Walzenmantel
13 = Temperierbohrungen
14 = Kreismesser
15 = Walzenspalt
16 = Extruder
17 = Pfeil
18 = Komponentenstreifen
19 = Komponentenstreifen
20 = Profilkomponentenstreifen
21 = Randmesser
22 = Randmesser
23 = Spalt
24 = Pfeil
25 = Laufstreifen
26 =
27 =
28 =
29 =
30 = Einwalzenkopf
31 = Streifen
32 = Saplt
33 = Randmesser
34 = Streifen
35 = Spalt
36 = Einwalzenkopfsystem
37 = Einwalzenkopfsystem
38 = Streifen
39 = Streifen
40 = Randbeschneideinrichtung
41 = Randbeschneideinrichtung
42 = Spalt
43 = Walze
44 = Walze
45 = Walzenspalt

## Ansprüche

1. Verfahren zum Herstellen von aus mehr als einer Kautschukkomponente bestehenden Profilstreifen für Laufstreifen, Seitenstreifen und Innerlinern von Autoreifen auf einem Einwalzenkopfsystem, bei dem einzelne, jeweils aus verschiedenen Mischungen bestehende Profilkomponentenstreifen unmittelbar auf eine rotierende Walze extrudiert und zusammenlaminiert werden,

**dadurch gekennzeichnet,**

daß jeder Profilkomponentenstreifen je für sich auf eine eigene Walze extrudiert und auf dieser randbeschnitten wird, und
daß die randbeschnittenen Profilkomponentenstreifen anschließend in den durch die einzelnen Walzen gebildeten Spalten zu dem fertigen Profilstreifen zusammenlaminiert werden, der aus dem letzten Laminierspalt abgezogen wird.

2. Anlage zur Durchführung des Verfahrens nach Anspruch 1, die für jeden Profilkomponentenstreifen einen von einem Extruder gespeisten Profilspritzkopf mit einer Mundstückspritzleiste als obere Begrenzung des Düsenaustrittes und einer rotierenden Kalanderwalze als untere Begrenzung des Düsenaustrittes aufweist,

**dadurch gekennzeichnet,**

daß jedem Profilspritzkopf (1, 2, 3, 30, 36, 37) eine eigene Walze zugeordnet ist,
daß den einzelnen Walzen beidseitige Randbeschneideinrichtungen (14, 21, 22, 33, 40, 41) für die extrudierten Profilstreifen (18, 19, 31, 34, 38, 39) zugeordnet sind, und
daß einander benachbarte Walzen zwischen sich Laminierspalte (15, 23, 32, 35, 42) bilden.

3. Anlage nach Anspruch 2,

**dadurch gekennzeichnet,**

daß die Randbeschneideinrichtungen (14, 21, 22, 33, 40, 41) radial und axial zur Walzenlängsachse verstellbar ausgebildet sind.

4. Anlage nach Anspruch 2,

**dadurch gekennzeichnet,**

daß sich zwei Profilspritzköpfe (2, 3) mit ihren zugeordneten, einen Laminierspalt bildenden Walzen in einer waagerechten Achse gegenüberstehen, wobei einer der beiden Spritzköpfe einschl. des Extruders und der Walze waagerecht verfahrbar ausgebildet ist.

5. Anlage nach Anspruch 2,

**dadurch gekennzeichnet,**

daß die Walzen von drei Profilspritzköpfen (1, 2, 3, 30, 36, 37) L-förmig zueinander angeordnet sind, wobei der Spritzkopf (1, 30) an der oberen Walze (11, 43) zusammen mit dem Extruder in Richtung der Längsachse des Extruders und zusätzlich etwa um die Längsmittelachse der Walze (11, 43) verschwenkbar ausgebildet ist.

6. Anlage nach einem der Ansprüche 2 bis 5,

**dadurch gekennzeichnet,**

daß alle Walzen und Spritzköpfe (1, 2, 3, 30, 36, 37) separat temperierbar ausgebildet sind.

Fig. 1

EP 0 314 900 A2

Fig. 2

EP 0 314 900 A2